# EUROPEAN PATENT APPLICATION

(11) **EP 1 298 583 A1**
(43) Date of publication of application: **02.04.2003**
(21) Application number: 01936847.1
(22) Date of filing: 05.06.2001
(51) Int. Cl.: G06T 1/00

(54) **IMAGE PROCESSING SYSTEM**

(30) Priority: 04.07.2000 JP 2000201906
(71) Applicant: Nippon Sheet Glass Co., Ltd., Osaka-shi, Osaka 541-0041 (JP)
(72) Inventor: MIYAKE, Atsushi, Nippon Sheet Glass Co., Ltd, Osaka-shi, Osaka 541-0041 (JP)
(74) Representative: Phillips, Patricia Marie
(86) International application number: JP0104722
(87) International publication number: WO02003329

(57) **Abstract**

An image processing system according to the present invention comprises: a plurality of line sensor cameras; a plurality of board computers connected to the line sensor cameras, respectively; a host computer connected to the plurality of board computers via a LAN; and a display connected to the host computer. The line sensor camera outputs image data on an object to be inspected. The board computer is provided with an image input board in one-to-one correspondence to the line sensor camera. The computer subjects the image data transmitted from the line sensor camera via the image input board to the image processing, so as to obtain and classify information data on defects of the object to be inspected. The host computer subjects the classified information data on the defects, transferred from the board computers via the LAN to sorting processing, so as to judge whether or not there are the predetermined number or more of defects, each having a predetermined size or larger, thus displaying the judgment result on the display.

## Description

### TECHNICAL FIELD

The present invention relates to an image processing system and, more particularly, to an image processing system for detecting defects which exist within an object to be inspected such as a glass substrate.

### BACKGROUND ART

With the enhanced processing ability in recent years, a personal computer has been able to mount a bulk memory thereon. Thus, a personal computer has been used in an image processing system for detecting defects which exist within an object to be inspected.

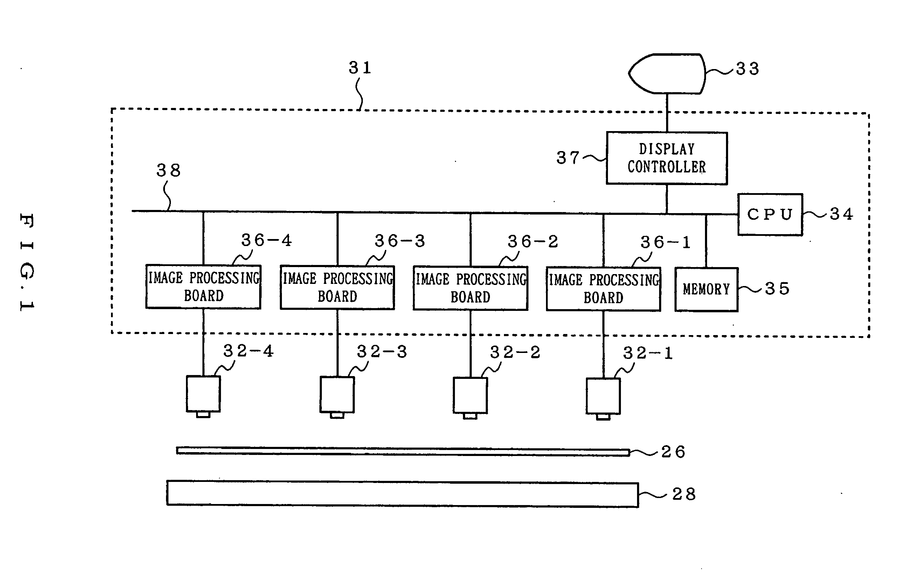

Fig. 1 is a diagram illustrating the configuration of a conventional image processing system for detecting defects which exist within an object to be inspected such as a glass substrate. The conventional image processing system illustrated in Fig. 1 comprises a personal computer 31, a plurality of line sensor cameras 32-1 to 32-4, each having a sensor of 2,000 to 10,000 pixels, and a display 33.

The personal computer 31 is provided with a CPU 34, a memory 35 for storing image data therein, a plurality of image processing boards 36-1 to 36-4 serving as hardware specifically designed to process an image, and a display controller 37. The CPU 34, the memory 35, the image processing boards 36-1 to 36-4 and the display controller 37 are connected to a bus (for example, a PCI bus) 38.

The line sensor cameras 32-1 to 32-4 are connected to the image processing boards 36-1 to 36-4, respectively; and the display 33 is connected to the display controller 37.

Furthermore, the line sensor cameras 32-1 to 32-4 are arranged on one side of and opposite to a glass substrate 26 as an object to be inspected, so as to pick up the image of the glass substrate 26 along a predetermined scanning line.

On the other side of the glass substrate 26, a lighting device (for example, a fluorescent lamp) 28 is disposed opposite to the glass substrate 26. A light beam from the lighting device 28 passes through the glass substrate 26, and then, enters a light receiving portion (i.e., a sensor) of each of the line sensor cameras 32-1 to 32-4.

The conventional image processing system is adapted to detect defects of the glass substrate 26 by processing the image data transmitted from the line sensor cameras 32-1 to 32-4 in accordance with to the procedures, as follows:
1. inputting the image data on the glass substrate 26 via each of the line sensor cameras 32-1 to 32-4;
2. subjecting the input image data (i.e., gray data having, e.g., 256 levels of gray in the case of 8-bit data) to digital filtering, to convert it into image data from which defects are easily extracted;
3. expressing the converted image data at a predetermined slice level in a binary form (in any of ternary to quinary forms in some case);
4. labeling the image data extracted in the binary expression, so as to detect defects of the glass substrate 26, thereby obtaining data on the size, area, position or the like of each of the defects; and
5. comparing the size or area of each of the defects with a preset value, so as to classify the defects by size, thereby displaying the classified defects on the display 33.

In the case where the above-described processing is to be performed at real time by the personal computer in the conventional image processing system, the amount of image data is too large to perform the processing only by software at real time. Consequently, there is generally provided hardware specifically designed for the image processing. Such hardware performs the image processing, so that the result is displayed on the display. However, the provision of the hardware specifically designed for the image processing increases the cost of the image processing system.

Moreover, the number of line sensor cameras which can be connected in the image processing system using a general personal computer is limited to about four because of the specifications of the PCI bus.

### DISCLOSURE OF THE INVENTION

An object of the present invention is to provide an image processing system for performing processing with respect to image data transmitted from line sensor cameras at real time without using any hardware specifically designed for image processing, so as to detect defects which exist within an object to be inspected.

An image processing system according to the present invention comprises: a plurality of line sensor cameras; a plurality of board computers connected to the line sensor cameras, respectively; a host computer connected to the plurality of board computers via a LAN; and a display connected to the host computer.

The line sensor camera receives an image of an object to be inspected, and then, outputs image data. The board computer is provided with an image input board, which does not perform any image processing but has only the function of inputting the image data, in one-to-one correspondence to the line sensor camera. The computer subjects the image data transmitted from the line sensor camera via the image input board to the image processing, so as to obtain and classify information data on defects of the object to be inspected.

The host computer subjects the classified information data on the defects, transferred from the board computers via the LAN to sorting processing, so as to judge whether or not there are the predetermined number or more of defects, each having a predetermined size or larger.

Furthermore, an image processing system according to the present invention comprises: a plurality of line sensor cameras; a plurality of board computers connected to the line sensor cameras, respectively; a host computer connected to the plurality of board computers via a LAN; and a display connected to the host computer.

The line sensor camera receives an image of an object to be inspected, and then, outputs image data. The board computer is provided with an image input board having the functions of inputting the image data and performing a part of image processing, in one-to-one correspondence to the line sensor camera. The computer subjects the image data transmitted from the line sensor camera via the image input board to the image processing, so as to obtain and classify information data on defects of the object to be inspected.

The host computer subjects the classified information data on the defects, transferred from the board computers via the LAN to sorting processing, so as to judge whether or not there are the predetermined number or more of defects, each having a predetermined size or larger.

### BRIEF DESCRIPTION OF THE DRAWINGS

Fig. 1 is a diagram illustrating the configuration of a conventional image processing system;
Fig. 2 is a diagram illustrating the configuration of a mode carrying out an image processing system according to the present invention; and
Fig. 3 is a diagram illustrating the state in which five line sensor cameras scan an image along a scanning line.

### BEST MODE CARRYING OUT THE INVENTION

Now, a mode carrying out the present invention will be described in reference to the drawings.

A recent personal computer can perform all the processing of image data transmitted from line sensor cameras by the use of its own software owing to its enhanced processing ability and a bulk memory mounted thereon, without using any hardware specifically designed for image processing.

Although the processing ability of the personal computer has been enhanced, the amount of data which a single computer system can process at real time is not more than the amount of image data transmitted from a single line sensor camera having a sensor of 10,000 pixels under the current circumstances. In view of this, according to the present invention, one computer is assigned to one line sensor camera in processing the image data transmitted from a plurality of line sensor cameras, and thus, a plurality of computers perform the image processing. The result of the image processing is transferred to an independent host computer connected via a high-speed network. Thereafter, the host computer receives the results of the image processing transmitted from the computers, and finally, displays the result of all of the image processing on a display device.

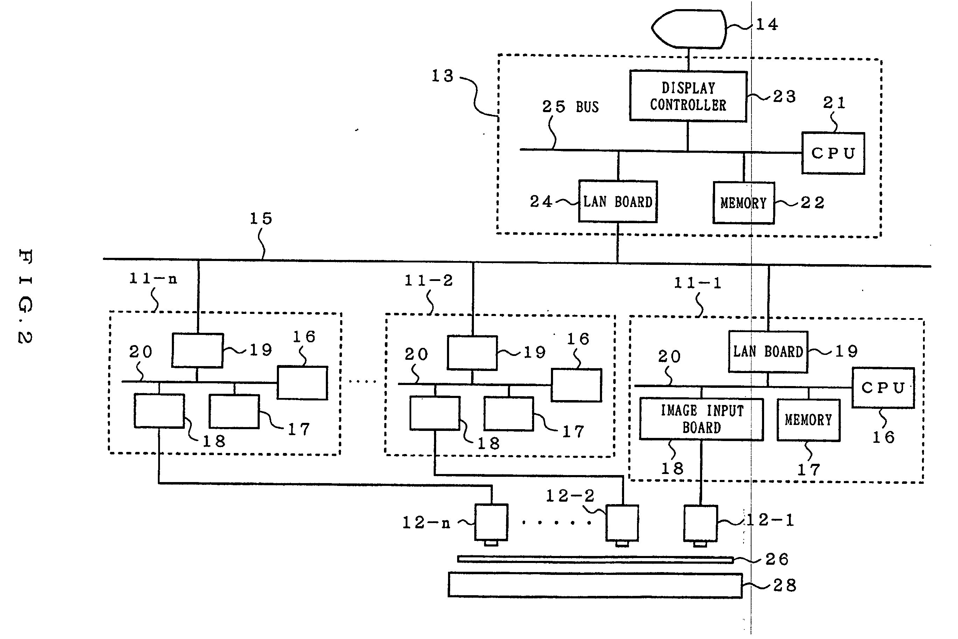

Fig. 2 is a diagram illustrating the configuration of a mode carrying out an image processing system according to the present invention.

The image processing system illustrated in Fig. 2 comprises a plurality of line sensor cameras 12-1 to 12-n, a plurality of board computers 11-1 to 11-n connected to the line sensor cameras 12-1 to 12-n, respectively, a host computer 13 connected to the board computers 11-1 to 11-n via a LAN 15, and a display 14 connected to the host computer 13.

The board computer 11 includes a CPU 16, a memory 17 for storing the image data therein, an image input board 18 which does not perform any image processing but has only the function of inputting the image data, and a LAN board 19 connected to the LAN 15. The CPU 16, the memory 17, the image input board 18 and the LAN board 19 are connected to a bus 20. The image input boards 18 are disposed in one-to-one correspondence to the line sensor cameras 12-1 to 12-n.

The host computer 13 includes a CPU 21, a memory 22 for storing the image data therein, a display controller 23 and a LAN board 24. The CPU 21, the memory 22, the display controller 23 and the LAN board 24 are connected to a bus 25.

The line sensor cameras 12-1 to 12-n are connected to the image input boards 18 mounted inside the board computers 11-1 to 11-n, respectively. The display 14 is connected to the display controller 23 equipped inside the host computer 13.

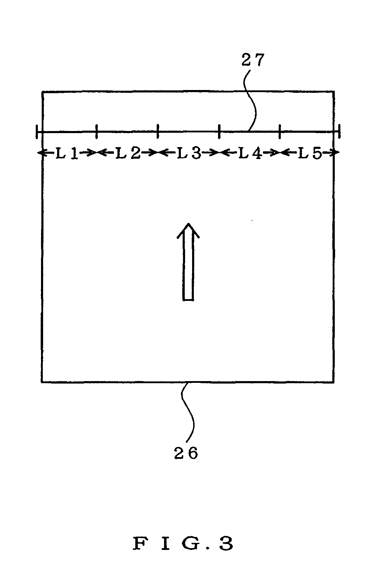

Furthermore, the line sensor cameras 12-1 to 12-n are arranged on one side of and opposite to a glass substrate 26, so as to pick up the image of the glass substrate 26 along a predetermined scanning line. Fig. 3 is a diagram illustrating the state in which five line sensor cameras scan an image along a scanning line. In Fig. 3, an arrow indicates a direction in which the glass substrate 26 is conveyed. The line sensor camera 12-1 scans an image within a range L1 along the scanning line 27; the line sensor camera 12-2 scans the image within a range L2 along the scanning line 27; and in the same manner, the line sensor cameras 12-3 to 12-5 scan the image within ranges L3 to L5 along the scanning line 27, respectively.

On the other side of the glass substrate 26, a lighting device (for example, a fluorescent lamp) 28 is disposed opposite to the glass substrate 26. A light beam from the lighting device 28 passes through the glass substrate 26, and then, enters a light receiving portion (i.e., a sensor) of each of the line sensor cameras 12-1 to 12-n.

Next, explanation will be made on operation of the image processing system carried out in the mode illustrated in Fig. 2.

The board computer 11 receives the image data on the glass substrate 26 (i.e., gray data having, e.g., 256 levels of gray in the case of 8-bit data) from the line sensor camera 12 having a sensor of 2,000 pixels to 10,000 pixels via the image input board 18, stores the image data in the memory 17, and then, compresses the stored image data.

Subsequently, the board computer 11 expresses the compressed image data at a predetermined slice level in a binary form (in any of ternary to quinary forms in some case), labels the image data extracted in the binary expression (labeling processing), so as to detect defects, and then, obtains information data on each of the defects, such as a position, a size (x, y), an area, a maximum value, a minimum value and a volume of each of the defects which exist on the glass substrate 26.

Furthermore, the board computer 11 compares the size or area of each of the defects with a preset value, so as to classify the defects by size, and then, transfers the classified information data on the defects to the memory 22 in the host computer 13.

The host computer 13 subjects, to sorting processing, the information data on the defects of the glass substrate 26 transferred from the board computers 11, and then, displays them on the display 14 in decreasing order of size. And then, the host computer 13 judges the glass substrate 24 to be a defective product in the case where there are the predetermined number or more of defects, each having a predetermined size or larger.

Incidentally, the host computer 13 may perform a part of the processing of obtaining the information on each of the defects of the object to be inspected and classifying the defects, in place of the board computer 11. For example, the host computer 13 may perform the processing of comparing the size or area of each of the defects with the preset value, and then, classifying the defects by size.

Alternatively, according to the present invention, image data on the surroundings of the position of the defect may be transferred from the board computer 11 to the host computer 13, and then, an image around the defect may be displayed on the display 14.

In the above-described mode, the image input board 18 never performs any image processing but has only the function of inputting the image data. However, according to the present invention, a part of the image processing may be assigned to the image input board 18 to such an extent as not to increase a cost such that the image input board 18 performs a part of the image processing such as shading correction in addition to inputting of the image data.

Furthermore, since the amount of data which the single board computer can perform the processing at real time is not more than the amount of data transmitted from the single line sensor camera having a sensor of about 10,000 pixels under the current circumstances, one board computer is assigned to one line sensor camera in the above-described mode. However, according to the present invention, a single board computer may process image data transmitted from a plurality of line sensor cameras as a processing speed is further increased and a memory to be mounted is further improved.

Additionally, in the above-described mode, the image data transmitted from the line sensor camera is compressed, expressed in the binary form and labeled, and thus, the defect is detected. However, according to the present invention, the image data may be expressed in the binary form and labeled without compressing the image data, so as to detect a defect as a processing speed of a computer is further increased and a memory to be mounted in the computer is further improved.

Moreover, the present invention has been described by way of the above-described mode in which the defect of the object to be inspected is detected by using the transparent beam. However, the present invention is applicable to the case where the defect of the object to be inspected is detected by using a reflecting beam. In addition, although the description has been given of the case where the defect of the glass substrate is detected, the present invention is not limited to the glass substrate but is applicable to the case where a defect of a plain plate-like product such as a plastic plate, an iron plate, a sheet of paper or a film is detected.

Furthermore, although the board computer has been used in the above-described mode, the board computer may be replaced with a normal personal computer, according to the present invention.

### INDUSTRIAL APPLICABILITY

As described above, according to the present invention, it is possible to detect the defects of the object to be inspected by the use of the inexpensive image input boards only for inputting the image data without using any expensive image processing board specifically designed for the image processing, thus constructing the inexpensive system.

Furthermore, according to the present invention, the processing is assigned to the plurality of computers, which are connected via the high-speed network, thus achieving the processing of the large amount of the image data at real time, although the system is inexpensive.

## Claims

1. An image processing system comprising:
a plurality of image input means, each of which receives an image of an object to be inspected, and then, outputs image data;
a plurality of computers provided with image input boards, each of which does not perform any image processing but has only the function of inputting the image data, in one-to-one correspondence to the image input means, the computer subjecting the image data transmitted from the image input means via the image input board to the image processing, so as to obtain and classify information data on defects of the object to be inspected;
a host computer connected to the computers via a network, so as to process the classified information data on the defects, transferred from the computers; and
display means for displaying the result of the processing by the host computer.

2. An image processing system as claimed in claim 1, wherein the host computer subjects the classified information data on the defects, transferred from the computers to sorting processing, so as to judge whether or not there are the predetermined number or more of defects, each having a predetermined size or larger.

3. An image processing system as claimed in claim 1, wherein the host computer performs a part of the processing of obtaining and classifying the information data on the defects of the object to be inspected, the processing being performed by the computer.

4. An image processing system as claimed in claim 1, wherein the computers are provided with the plurality of image input boards, so as to perform the image processing of the image data transmitted from the plurality of image input means, thus obtaining the information data on the defects of the object to be inspected.

5. An image processing system as claimed in claim 1, wherein the image processing includes the processing of expressing the image data at a predetermined slice level in a binary form, and subsequently, labeling the data.

6. An image processing system comprising:
a plurality of image input means, each of which receives an image of an object to be inspected, and then, outputs image data;
a plurality of computers provided with image input boards, each having the functions of inputting the image data and performing a part of image processing, in one-to-one correspondence to the image input means, the computer subjecting the image data transmitted from the image input means via the image input board to the image processing, so as to obtain and classify information data on defects of the object to be inspected;
a host computer connected to the computers via a network, so as to process the classified information data on the defects, transferred from the computers; and
display means for displaying the result of the processing by the host computer.

7. An image processing system as claimed in claim 6, wherein the host computer subjects the classified information data on the defects, transferred from the computers to sorting processing, so as to judge whether or not there are the predetermined number or more of defects, each having a predetermined size or larger.

8. An image processing system as claimed in claim 6, wherein the host computer performs a part of the processing of obtaining and classifying the information data on the defects of the object to be inspected, the processing being performed by the computer.

9. An image processing system as claimed in claim 6, wherein the computers are provided with the plurality of image input boards, so as to perform the image processing of the image data transmitted from the plurality of image input means, thus obtaining the information data on the defects of the object to be inspected.

10. An image processing system as claimed in claim 6, wherein the image processing includes the processing of expressing the image data at a predetermined slice level in a binary form, and subsequently, labeling the data.
